# EUROPEAN PATENT APPLICATION

(11) **EP 3 699 406 A1**
(43) Date of publication of application: **26.08.2020**
(21) Application number: 20151637.4
(22) Date of filing: 14.01.2020
(51) Int. Cl.: F01D 25/24, F16B 1/00

(54) **COMPONENT FOR FASTENING ARRANGEMENT, FASTENING ARRANGEMENT AND GAS TURBINE ENGINE COMPRISING FASTENING ARRANGEMENT**

(30) Priority: 28.01.2019 GB 201901108
(71) Applicant: Rolls-Royce plc, London N1 9FX (GB)
(72) Inventor: Cousins, Daniel, Derby, Derbyshire DE24 8BJ (GB); Gupta, Alok, Derby, Derbyshire DE24 8BJ (GB)
(74) Representative: Rolls-Royce plc

(57) **Abstract**

A component for a fastening arrangement of a gas turbine engine, the component comprising: a first abutment member; a second abutment member; a spring member between the first and second abutment members; a conduit comprising a throughole through the first and second abutment members and the spring member; the component being configured such that a shaft of a fastener passes through the throughole, a head of the fastener abuts the first abutment member and a part to be fastened by the fastening arrangement abuts the second abutment member, when the component is in the fastening arrangement.

## Description

### Field of the Disclosure

The present disclosure relates to components for fastening arrangements. In particular, the invention relates to fastening arrangements within a gas turbine engine for an aircraft.

### Background of the Disclosure

Gas turbine engines may comprise regions which operate at relatively high temperatures and regions which operate at relatively low temperatures. Examples of such regions include the engine core which operates at relatively high temperatures and the gear box, which operates at lower temperatures.

In order to protect the gear box from high temperatures of the engine core, a heat shield may be provided between the gear box and the engine core. The heat shield is at risk from high stresses due to thermal expansion. However, the heat shield is typically made from a ceramic matrix composite (CMC) material, which may be relatively brittle and therefore at risk of fracture and wear due to thermal and vibrational stresses.

It is an aim of the present disclosure to at least partially address the above problems.

### Summary

According to a first aspect there is provided a component for a fastening arrangement of a gas turbine engine, the component comprising: a first abutment member; a second abutment member; a spring member between the first and second abutment members; and a conduit comprising a through-hole through the first and second abutment members and the spring member; the component being configured such that a shaft of a fastener passes through the through-hole, a head of the fastener abuts the first abutment member and a part to be fastened by the fastening arrangement abuts the second abutment member, when the component is in the fastening arrangement.

Optionally, the second abutment member and the conduit comprise respective engagement portions configured to engage with each other to prevent rotational displacement between the second abutment member and the conduit about an axis through the through-hole.

Optionally, the engagement portions may comprise respective channels and protrusions. Optionally, the channels are provided in an outer wall of the conduit.

Optionally, the engagement portions are configured to engage with each other to allow translational displacement between the second abutment member and the conduit in a direction parallel to the axis through the through-hole.

Optionally, the component comprises at least two sets of respective engagement portions.

Optionally, the first and second abutment members substantially surround the conduit.

Optionally, the conduit is substantially cylindrical in shape.

Optionally, the first and/or second abutment members are substantially disc-shaped.

Optionally, the conduit extends from the first abutment member.

Optionally, the conduit is integrally formed with the first abutment member.

Optionally, the second abutment member is connected to the first abutment member by the spring member.

Optionally, the first and second abutment members and the spring member are integrally formed.

Optionally, the component is formed as one element by an additive manufacturing process.

Optionally, the spring member comprises a wave spring.

Optionally, the spring member substantially surrounds the walled conduit.

Optionally, the spring is configured to provide a spring force in a direction parallel to an axis through the through-hole.

According to a second aspect there is provided fastening arrangement for fastening together first and second parts of gas turbine engine having a through-hole therethrough, the fastening arrangement comprising: the component of the first aspect, wherein the conduit is arranged with the through-hole in the first and second parts and the second abutment member abuts the first part; and a fastener comprising a shaft arranged within the through-hole of the conduit and a head abutting the first abutment part.

Optionally, the fastening arrangement, further comprises a nut configured to engage with a thread on the shaft of the fastening member, and arranged to abut the second part of the gas turbine engine and tighten the fastening arrangement such that the spring member is compressed between the head of the fastener and the first part of the gas turbine engine.

Optionally, the fastening arrangement comprises an insert arranged between the first part of the gas turbine engine and at least one of the second abutment member and the conduit.

Optionally, the insert is further arranged between the first and second parts of the gas turbine engine.

Optionally, the insert comprises a low friction surface.

Optionally, the insert comprises one or more slots to allow for thermal expansion.

According to a third aspect there is provided a gas turbine engine for an aircraft, the gas turbine engine comprising: the fastening arrangement of the second aspect

Optionally, the gas turbine engine, further comprises: an engine core comprising a turbine, a compressor, and a core shaft connecting the turbine to the compressor; a fan located upstream of the engine core, the fan comprising a plurality of fan blades; and a gearbox that receives an input from the core shaft and outputs drive to the fan so as to drive the fan at a lower rotational speed than the core shaft.

Optionally, the turbine is a first turbine (19), the compressor is a first compressor (14), and the core shaft is a first core shaft (26); the engine core further comprises a second turbine (17), a second compressor (15), and a second core shaft (27) connecting the second turbine to the second compressor; and the second turbine, second compressor, and second core shaft are arranged to rotate at a higher rotational speed than the first core shaft.

Optionally, the gas turbine engine further comprises: a heat shield between the engine core and the gearbox; wherein the heat shield is mounted to the gas turbine engine by the fastening arrangement of the second aspect.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox may be a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4.2, or 3.2 to 3.8, for example on the order of or at least 3, 3.1, 3.2, 3.3, 3.4, 3.5, 3.6, 3.7, 3.8, 3.9, 4, 4.1 or 4.2. The gear ratio may be, for example, between any two of the values in the previous sentence. Purely by way of example, the gearbox may be a "star" gearbox having a ratio in the range of from 3.1 or 3.2 to 3.8. In some arrangements, the gear ratio may be outside these ranges.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds), for example in the range of from 0.28 to 0.32. These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 220 cm, 230 cm, 240 cm, 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350 cm, 360 cm (around 140 inches), 370 cm (around 145 inches), 380 (around 150 inches) cm, 390 cm (around 155 inches), 400 cm, 410 cm (around 160 inches) or 420 cm (around 165 inches). The fan diameter may be in an inclusive range bounded by any two of the values in the previous sentence (i.e. the values may form upper or lower bounds), for example in the range of from 240 cm to 280 cm or 330 cm to 380 cm.

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 220 cm to 300 cm (for example 240 cm to 280 cm or 250 cm to 270 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 330 cm to 380 cm may be in the range of from 1200 rpm to 2000 rpm, for example in the range of from 1300 rpm to 1800 rpm, for example in the range of from 1400 rpm to 1800 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.28, 0.29, 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds), for example in the range of from 0.28 to 0.31 or 0.29 to 0.3.

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, 17, 17.5, 18, 18.5, 19, 19.5 or 20. The bypass ratio may be in an inclusive range bounded by any two of the values in the previous sentence (i.e. the values may form upper or lower bounds), for example in the range of from 13 to 16, or 13 to 15, or 13 to 14. The bypass duct may be substantially annular. The bypass duct may be radially outside the engine core. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds), for example in the range of from 50 to 70.

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds), for example in the range of from 80 Nkg⁻¹s to 100 Nkg⁻¹s, or 85 Nkg⁻¹s to 95 Nkg⁻¹s. Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). Purely by way of example, a gas turbine as described and/or claimed herein may be capable of producing a maximum thrust in the range of from 330kN to 420 kN, for example 350kN to 400kN. The thrust referred to above may be the maximum net thrust at standard atmospheric conditions at sea level plus 15 degrees C (ambient pressure 101.3kPa, temperature 30 degrees C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds), for example in the range of from 1800K to 1950K. The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 14, 16, 18, 20, 22, 24 or 26 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 degrees C. Purely by way of further example, the cruise conditions may correspond to: a forward Mach number of 0.85; a pressure of 24000 Pa; and a temperature of -54 degrees C (which may be standard atmospheric conditions at 35000 ft).

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Brief description of the drawings

Embodiments will now be described by way of example only, with reference to the Figures, in which:
**Figure 1** is a sectional side view of a gas turbine engine;
**Figure 2** is a close up sectional side view of an upstream portion of a gas turbine engine;
**Figure 3** is a partially cut-away view of a gearbox for a gas turbine engine;
**Figure 4** is a cut-away view of a fastener arrangement of the disclosure;
**Figure 5** is a cut-away view of a component for a fastening arrangement of the present disclosure;
**Figure 6** is an oblique view, from above, of the component of disclosure;
**Figure 7** is an oblique view, from below, of the component of disclosure;
**Figure 8** is a side view of the component of the disclosure.

### Detailed description

Aspects and embodiments of the present disclosure will now be discussed with reference to the accompanying figures. Further aspects and embodiments will be apparent to those skilled in the art.

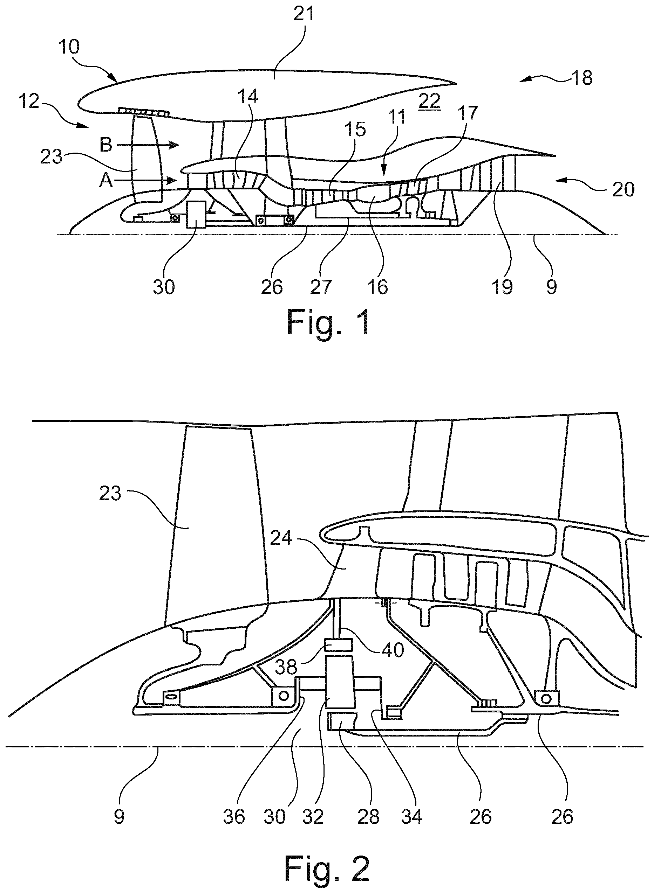

**Figure 1** illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in **Figure 2****.** The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

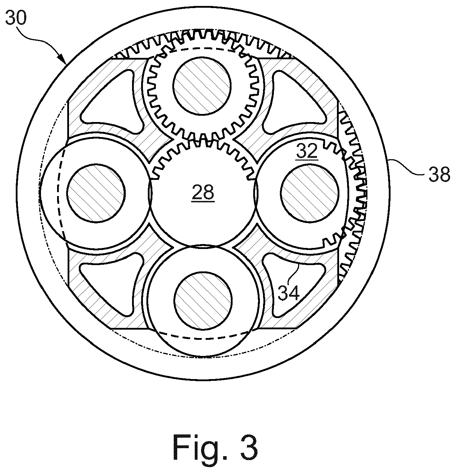

The epicyclic gearbox 30 is shown by way of example in greater detail in **Figure 3****.** Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core exhaust nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

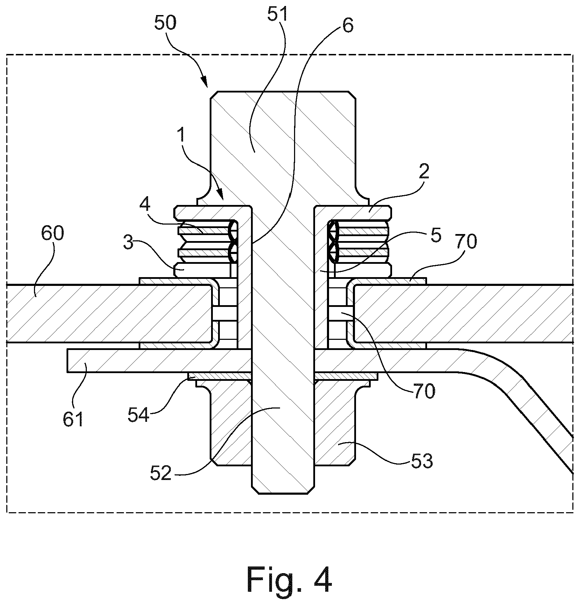

**Figure 4** shows an example fastening arrangement according to the present disclosure. The fastening arrangement is configured to fasten a first part 60 to a second part 60 of the gas turbine engine 10. In the specific example shown, the first part 60 is a heat shield (e.g. a CMC heat shield) and the second part 61 is a bracket of the gearbox 30.

The first part 60 is fastened to the second part 61 by a fastener 50 (e.g. a bolt) passing through a throughole in the first part 60 and the second part 61. Optionally, a nut 53 and washer 54 may form part of the fastening arrangement. As shown in figure 4, a further component 1 is provided between the head 51 of the fastener 50 and the first part 60. Optionally, an insert 70 may be provided between the component 1 and the first part 60.

Although the fastening arrangement of Figure 4 is for a heat shield 60 attached to a bracket 61 of the gear box 30, it should be understood that the fastening arrangement disclosed herein could be used for fastening any two parts of the gas turbine engine 10 together.

As shown in Figure 4, the component 1 generally comprises a first abutment member 2, a second abutment member 3, a spring member 4 between the first and second abutment members 2, 3 and a conduit 5. The conduit 5 comprises a throughole 6. The conduit is arranged such that the throughhole 6 passes through the first and second abutment members 2, 3.

The component 1 is configured such that, in the fastening arrangement, the shaft 52 of the fastener 50 passes through the throughole 6 of the conduit 5. Further, the head 51 of the fastener abuts the first abutment member 2. The second abutment member 3 is configured to abut the first part 60 to be fastened by the fastening arrangement.

Accordingly, the first and second abutment members 2, 3 and spring member 4 are sandwiched between the head 51 of the fastener 50 and the first part 60. Further, the conduit 5 is arranged within the throughole in first part 60.

In the fastening arrangement, a threaded nut 53 (and optional washer 54) may be configured to engage with a thread on the shaft 52 of the fastening member 50. The nut 53 may be arranged to abut the second part 61 of the gas turbine engine 10 and tighten the fastening arrangement such that the spring member 4 is compressed between the head 51 of the fastener 50 and the first part 60 of the gas turbine engine 10.

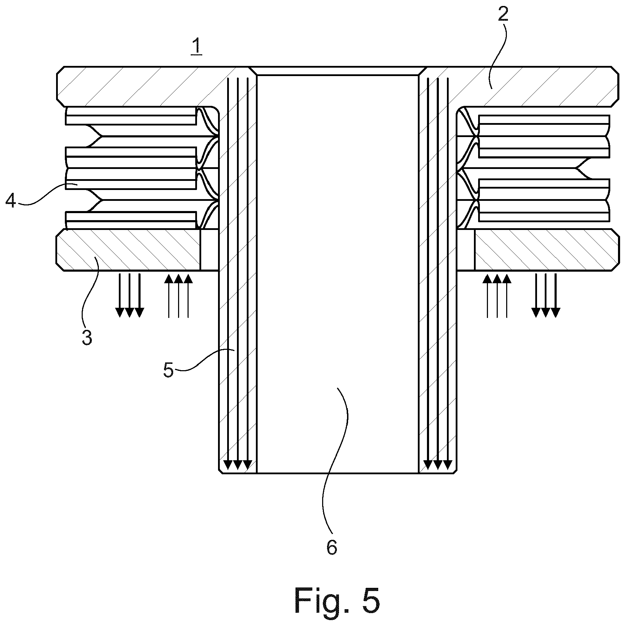

**Figure 5** is a more detailed cut-out view of the component 1. It can be seen from the arrows in this Figure that the load from the fastener 50 is transmitted via the first abutment member 2 and the conduit 5. The second abutment member 3 and spring member 4 may be compressed (e.g. by thermal expansion) by the first and or second parts 60, 61 being fastened by the fastening arrangement. Accordingly, the spring member 4 may exert an opposing spring force via the first and second abutment members 2, 3.

In the example shown in the Figures, it can be seen that the second abutment member 3 and spring member 4 are configured to move independently of the first abutment member 2 and conduit 5, at least in a direction parallel to an axis through the throughole 6. Accordingly, the second abutment member 3 and spring member 4 may not be fixedly connected to the conduit 5.

On the other hand, the first abutment member 2 and the conduit 5 may be fixedly connected to each other. For example, as shown in Figure 5, the conduit 5 may extend from the first abutment member 2. In some examples, such as that shown in the figures, the conduit 5 may be integrally formed with the first abutment member 2.

The second abutment member 3 may be connected to the first abutment member 2 by the spring member 4. In some examples, the first and second abutment members 2, 3 and the spring member 4 may be integrally formed with each other. For example, the component 1 may be made as a single element by an additive manufacturing process.

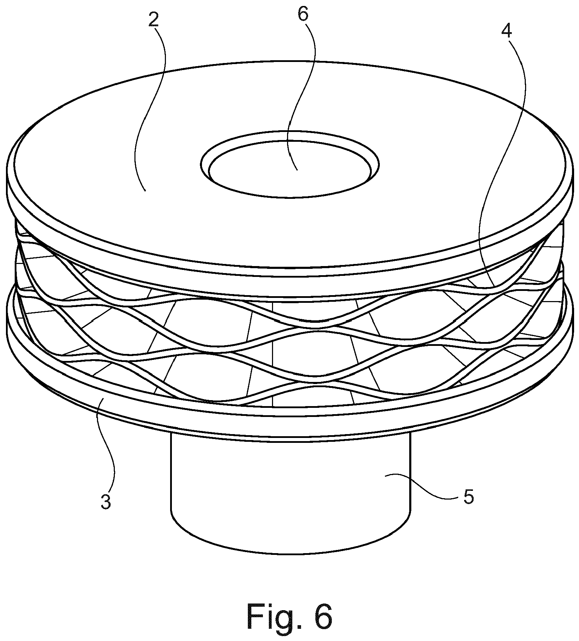

As shown in **Figure 6****,** the first and second abutment members 2, 3 may substantially surround the conduit 5. As shown, the conduit 5 may be substantially cylindrical in shape. Further, the first and or second abutment members may be substantially disc-shaped. The component 1 may have substantially cylindrical symmetry about the central axis through the throughhole 6.

Regardless of the specific shapes of the first and second abutment members 2, 3, an outer surface of the first abutment member 2 and an outer surface of the second abutment member 3 are preferably substantially planar. The outer surfaces in this context are those facing away from the spring member 4, and in a direction substantially parallel to the central axis through the throughhole 6.

The spring member 4 is not limited to any particular type of spring. However, as shown in Figure 6, the spring member 4 may comprise one or more wave springs. The spring member 4 may be configured to exert a spring force in a direction from the first abutment member 2 to the second abutment member 3. In other words, the spring member 4 provides a spring force in a direction parallel to a central axis through the throughole 6.

As shown in Figure 6, the spring member 4 may also substantially surround the conduit 5.

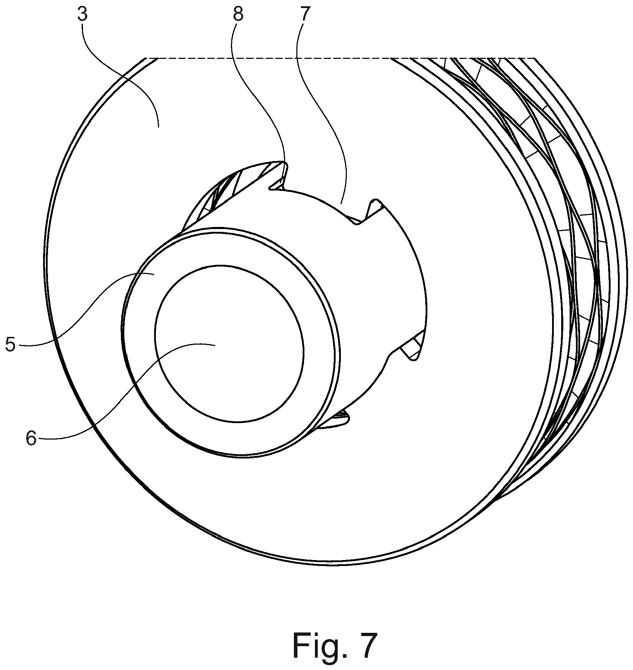

As shown in **Figure 7****,** the second abutment member 3 and the conduit 5 may comprise respective engagement portions 7, 8 configured to engage with each other to prevent rotational displacement between the second abutment member 2 and the conduit 5 about an axis through the throughole 6. As shown, the engagement portions of the conduit 5 may be channels 8 and the engagement portions of the second abutment member 3 may be corresponding protrusions 7. However, the converse arrangement is also possible. The protrusion 7 are configured to extend into the channels 8 in a direction oblique to (e.g. perpendicular to) an axis through the throughole 6.

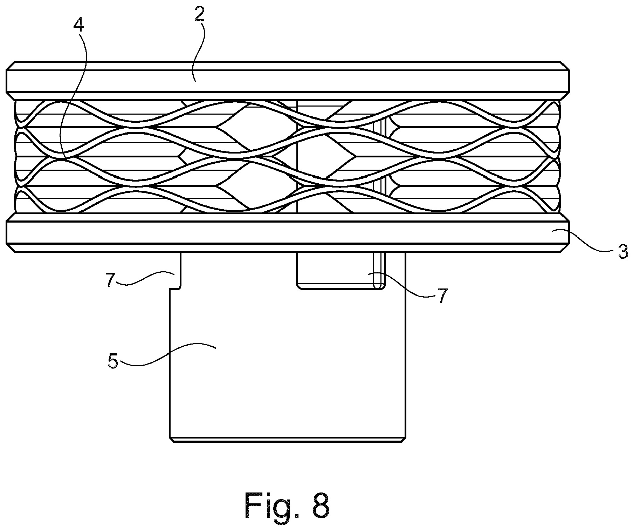

The engagement portions 7, 8 may be configured to engage with each other to allow translational displacement between the second abutment member 3 and the conduit 5 in a direction parallel to an axis passing through the throughhole 6. In the example shown in **Figure 8****,** channels 8 extend in an axial direction of the conduit 5 (i.e. parallel to an axis through the throughhole 6) to allow protrusions 7 of the second abutment member 3 to move up and down the channel 8, while remaining engaged with the channel 8.

Any number of sets of respective engagement portions may be provided. However, preferably at least two sets of respective engagement portions are provided on the second abutment member 3 and conduit 5. For example, three sets of respective engagement portions 7, 8 are provided in the example component 1 shown in Figures 7 and 8.

The component 1 described above may allow for thermal expansion of the of the first and second parts 60, 61 of the gas turbine engine 10. The component 1 may also provide damping of vibrations through the first and second parts 60, 61 of the gas turbine engine 10.

The materials from which the component 1 is formed may be any material having properties suitable for the load conditions, weight constraints and environment (e.g. temperature) in which the component 1 is to be used. For example the material may comprise one or more of: steel and its alloys, aluminium and its alloys, titanium and its alloys, nickel and its alloys, copper and its alloys, polymers, metal coated polymers, and composite materials. It should be understood that this list is not exhaustive.

As shown in Figure 4, in the fastening arrangement, an insert 70 may be provided between the component 1 and the first part 60 of the gas turbine engine 10. The insert may be provided specifically between the first part 60 and second abutment member 3 and/or between the first part 60 and the conduit 5. Optionally, the insert may also be provided between the first part 60 and the second part 61 of the gas turbine engine.

The insert 60 may comprise a low friction surface. This surface may allow sliding displacement between the component 1 and the first part, e.g. allowing for thermal expansion.

As shown in Figure 4, the insert may be configured to substantially surround the conduit 6. The insert may comprise a disc-shaped portion arranged on a first (e.g. top) surface of the first part 60 adjacent the second abutment member 3. A substantially cylindrical-shaped portion of the insert 70 may line the throughole in the first part 60 and be arranged adjacent the conduit 5. A further disc-shaped portion of the insert 70 may be provided on a second (e.g. bottom) surface of the first part 60 adjacent the second part 61.

The portion of the insert adjacent the conduit 5 may comprise one or more slots 71 allowing for thermal expansion of the insert 70. The slots 71 may extend in a circumferential direction of the insert 70.

The insert may be formed from a metal substrate. The metal substrate may be coated with a low friction material such as a ceramic or lubricant.

It will be understood that the invention is not limited to the embodiments above-described and various modifications and improvements can be made without departing from the concepts described herein within the scope of the following claims. Except where mutually exclusive, any of the features may be employed separately or in combination with any other features and the disclosure extends to and includes all combinations and sub-combinations of one or more features described herein.

## Claims

1. A component for a fastening arrangement of a gas turbine engine, the component comprising:
a first abutment member;
a second abutment member;
a spring member between the first and second abutment members; and
a conduit comprising a throughole through the first and second abutment members and the spring member;
the component being configured such that a shaft of a fastener passes through the throughole, a head of the fastener abuts the first abutment member and a part to be fastened by the fastening arrangement abuts the second abutment member, when the component is in the fastening arrangement.

2. The component of claim 1, wherein the second abutment member and the conduit comprise respective engagement portions configured to engage with each other to prevent rotational displacement between the second abutment member and the conduit about an axis through the throughole.

3. The component of claim 2, wherein the engagement portions comprise respective channels and protrusions.

4. The component of claim 3, wherein the channels are provided in an outer wall of the conduit.

5. The component of any one of claims 2 to 4, wherein the engagement portions are configured to engage with each other to allow translational displacement between the second abutment member and the conduit in a direction parallel to the axis through the throughole.

6. The component of any one of claims 2 to 5, comprising at least two sets of respective engagement portions.

7. The component of any preceding claim, wherein the first and second abutment members substantially surround the conduit.

8. The component of any preceding claim, wherein the conduit is substantially cylindrical in shape.

9. The component of any preceding claim, wherein the first and/or second abutment members are substantially disc-shaped.

10. The component of any preceding claim, wherein the conduit extends from the first abutment member.

11. The component of any preceding claim, wherein the conduit is integrally formed with the first abutment member.

12. The component of any preceding claim, wherein the first and second abutment members and the spring member are integrally formed.

13. The component of any preceding claim, wherein the spring is configured to provide a spring force in a direction parallel to an axis through the throughole.

14. A fastening arrangement for fastening together first and second parts of gas turbine engine having a throughole therethrough, the fastening arrangement comprising:
the component of any preceding claim, wherein the conduit is arranged with the throughole in the first and second parts and the second abutment member abuts the first part; and
a fastener comprising a shaft arranged within the throughole of the conduit and a head abutting the first abutment part.

15. The fastening arrangement of claim 14, further comprising a nut configured to engage with a thread on the shaft of the fastening member, and arranged to abut the second part of the gas turbine engine and tighten the fastening arrangement such that the spring member is compressed between the head of the fastener and the first part of the gas turbine engine.
